(19) Europäisches Patentamt
European Patent Office
Office européen des brevets

(11) Numéro de publication: **0 000 683**
**A1**

(12) **DEMANDE DE BREVET EUROPEEN**

(21) Numéro de dépôt: **78400068.9**

(22) Date de dépôt: **28.07.78**

(51) Int. Cl.²: **C 03 C 25/02**, C 08 J 5/24, C 08 J 5/08

(30) Priorité: **28.07.77 FR 7723198**

(43) Date de publication de la demande: **07.02.79 Bulletin 79/3**

(84) Etats contractants désignés: **BE DE FR GB LU NL SE**

(71) Demandeur: **SAINT-GOBAIN INDUSTRIES**
**62, Bd Victor Hugo**
**F-92209 Neuilly sur Seine. (FR)**

(72) Inventeur: **Droux, Michel**
**462, rue Clémenceau**
**F-73490 La Ravoire. (FR)**

(72) Inventeur: **Bocquet, Gilbert**
**Villa Maria 486, Chemin sous bois**
**F-73190 Challes-Les-Eaux. (FR)**

(54) **Procédé de fabrication de fibres de verre enrobées, fibres enrobées et leur utilisation pour le renforcement de matières plastiques.**

(57) L'invention est relative à la préparation de fibres de verre enrobées aptes à servir au renforcement de matières plastiques, notamment de pré-imprégnés SMC et aux produits en matières plastiques renforcées par de telles fibres. Le procédé de préparation des fibres de verre se caractérise en ce que l'on revêt les fibres par une composition aqueuse d'ensimage contenant essentiellement:

- 0 à 6% en poids d'une solution aqueuse d'une ou plusieurs résines époxydes modifiées ou d'une émulsion d'une ou plusieurs résines époxydes.
- 4 à 20% en poids d'une émulsion d'un copolymère à base d'acétate de vinyle et de monomères acryliques dont un au moins est à fonction époxyde,
- 0,02 à 1% en poids d'agent de pontage tel qu'un organosilane,
- 0,2 à 1% en poids d'un sel hygroscopique,
- 0 à 2% en poids d'un lubrifiant,
- 0 à 1% en poids d'acide acétique cristallisable,
- complément à 100% en eau désionisée.

EP 0 000 683 A1

Croydon Printing Company Ltd.

0000683

TITRE MODIFIÉ
voir page de garde

# PROCEDE DE FABRICATION DE FIBRES DE VERRE POUR PRE-IMPREGNES SMC ET PRODUITS OBTENUS

La présente invention est relative à l'ensimage de fibres de verre et à l'utilisation de ces fibres ensimées pour le renforcement de matériaux plastiques.

L'invention concerne plus particulièrement l'ensimage de fibres de verre utilisées pour le renforcement de feuilles de composition à mouler (sheet molding compound) ou encore dénommées préimprégnés SMC, à partir desquelles, par action de la chaleur et de la pression, on fabrique des produits moulés en matière plastique renforcée.

Dans l'emploi de préimprégnés pour fabriquer des articles en matière plastique renforcée par de la fibre de verre, on place généralement un ou plusieurs éléments appelés flans d'une feuille composite de résine et de fibres de verre coupées, préalablement fabriquée, au centre d'un moule sous une presse et, par action de la chaleur et de la pression, on forme l'article. On utilise généralement un flan dont la surface correspond à environ 60 % de la surface de l'article à mouler, ce qui fait que la matière plastique et les fibres de verre doivent fluer dans toutes les directions pour épouser parfaitement la forme du moule et pour procurer à l'article moulé un renforcement homogène. L'article fabriqué par ce procédé est généralement commercialisé brut de moulage et il doit donc présenter plusieurs caractéristiques. Il doit en particulier posséder de bonnes propriétés mécaniques et avoir un aspect de surface irréprochable.

Un bon aspect de surface se définit essentiellement suivant deux critères :

- absence de saillie de la fibre de verre à la surface de l'article moulé. Par exemple, on ne doit pas sentir au toucher que le matériau est renforcé par des fibres de verre. Ou encore, un examen en lumière rasante ne

doit pas déceler des défauts de surface. En fait, on recherche la planéité que présenterait un produit moulé d'une résine non renforcée,

- absence de visualisation de la fibre, par différence de couleur par rapport à la matrice résine. Quelle que soit la couleur du produit fini, donc indépendamment du pigment ajouté à la résine, les fibres ne doivent pas être visibles à la surface de l'article moulé.

Les caractéristiques précédemment citées que doivent présenter les produits moulés à partir de préimprégnés SMC leur sont procurées essentiellement par les qualités spécifiques de la fibre de verre utilisée pour le renforcement. Or, ces qualités spécifiques sont données à la fibre de verre par leur enrobage donc par l'ensimage qui leur est appliqué.

Les fibres de verre utilisées pour le renforcement de préimprégnés SMC subissent un traitement les rendant aptes au renforcement des plastiques en général. Le traitement doit agglomérer les filaments d'un même fil entre eux, les revêtir d'une pellicule lubrifiante pour protéger les filaments d'une abrasion mutuelle entre eux, conserver l'intégrité du fil durant les opérations de bobinage, de coupe, et favoriser la liaison entre le verre et les résines synthétiques lors du renforcement des matières plastiques. De plus, le traitement appliqué au fil doit lui procurer les propriétés particulières qui le rendent apte à l'application SMC. Notamment, le fil doit présenter une bonne aptitude au fluage (ou écoulement) lors de l'opération de moulage de l'article renforcé. Ainsi, les fils peuvent se disperser dans toute la résine et donner à l'article les caractéristiques mécaniques désirées. Le traitement doit également permettre au fil de se fractionner en filaments élémentaires au terme du moulage, pour que la répartition verre/résine soit la plus fine possible. Si le fractionnement intervient très tôt, avant moulage, ou en son début, le fluage du fil est mauvais. C'est pourquoi le fil doit présenter un bon équilibre entre l'intégrité et le fractionnement, qui est déterminé par le traitement subi par les filaments. Enfin, la fibre doit avoir une aptitude à la "disparition", c'est-à-dire que la fibre doit être invisible à la surface du produit moulé.

Des traitements appliqués à la fibre pour la rendre apte au renforcement de préimprégnés SMC ont déjà été décrits. Ainsi, il

est connu, suivant le brevet français 2 110 469, d'ensimer une fibre utilisée dans les préimprégnés SMC à l'aide d'une dispersion aqueuse contenant essentiellement une résine époxyde modifiée, une émulsion d'un copolymère d'acétate de polyvinyle et de N-méthylolacrylamide, un copolymère d'acétate de vinyle et d'éthylène sous forme d'émulsion, une cire du type polyéthylène glycol, un lubrifiant contenant un agent antistatique amide/ester, un lubrifiant non ionique et de l'huile minérale, une émulsion de silicone et un agent de pontage, le gamma-méthacryloxypropyltriméthoxysilane. La composition d'ensimage sus-citée procure à la fibre de verre certaines des propriétés qui la rendent apte à l'application SMC, en particulier un bon fluage. Par contre, d'autres propriétés ne lui sont pas conférées, ainsi l'aspect de surface des articles fabriqués à partir de résine renforcée par les fibres ensimées avec cette composition n'est pas parfait, notamment les fibres restent visibles, c'est pourquoi certains articles actuellement préparés à partir de préimprégnés SMC sont soit granulés à leur surface, soit enduits d'une couche de peinture.

La présente invention obvie aux inconvénients sus-cités en proposant un nouveau traitement de la fibre de verre à l'aide d'une nouvelle composition d'ensimage. Le nouveau traitement selon l'invention donne aux fibres de verre l'aptitude à l'application SMC en permettant d'obtenir un article fini moulé possédant de bonnes caractéristiques mécaniques grâce à un renforcement uniforme par la fibre de verre, en même temps qu'il possède un aspect de surface irréprochable, à savoir notamment que la fibre n'est plus visible à la surface de l'article.

Conformément à l'invention, on prépare les fibres de verre revêtues d'un enrobage les rendant aptes aux renforcements de préimprégnés SMC, par les opérations suivantes :

- on étire mécaniquement à grande vitesse des filaments de verre fondu,

- on revêt les filaments à l'aide d'une composition aqueuse d'ensimage,

- on rassemble les filaments de verre en cours d'étirage sous forme de fils qui sont : enroulés en gâteaux, séchés, puis assemblés en mèche de stratifils sous forme de pelote ou rassemblés directement en mèche sous forme de pelote et séchés.

Ce procédé se caractérise en ce qu'on revêt les filaments à l'aide d'une composition aqueuse d'ensimage comprenant une émulsion

d'un copolymère à base essentiellement d'acétate de vinyle et de monomères acryliques dont un au moins est à fonction époxyde, un ou des agents de pontage du type organo-silane, un agent antistatique tel qu'un sel hygroscopique, le cas échéant de l'acide acétique cristallisable.

Le copolymère à base essentiellement d'acétate de vinyle et de monomères acryliques dont un au moins est à fonction époxyde procure à la fibre, en combinaison avec les autres constituants de l'ensimage, les propriétés qui la rendent apte au renforcement des imprégnés SMC en lui fournissant en particulier l'aptitude à la disparition dans le produit fini.

Dans une réalisation préférée de l'invention, la composition contient un ou des agents lubrifiants choisis parmi les composés suivants : les émulsions de polyéthylène simple ou modifié cationique, les composés aminés cationiques, les tensio-actifs non ioniques. Les émulsions de polyéthylène peuvent être, en particulier, des émulsions de polyéthylène commercialisées sous l'appellation POLAPPRET 1045 par SCHIMMET ET SCHWARZ, les émulsions de polyéthylène modifié cationique telles que les produits commercialisés sous l'appellation VELUSTROL KPA par BASF et SOPROMINE 1159 par SOPROSOIE. Les composés aminés cationiques peuvent être les produits commercialisés sous l'appellation SODAMINE S 34 et SODAMINE CA par BARNIER. Les tensio-actifs non ioniques sont par exemple le monolaurate de polyéthylène-glycol de poids moléculaire 300, l'huile de ricin hydrogénée polyoxyéthylénée.

De préférence, on choisit parmi les lubrifiants cités, l'huile de ricin hydrogénée polyoxyéthylénée. Comme il sera montré dans les exemples qui suivront, l'addition de ce composé dans la composition d'ensimage procure un aspect encore meilleur au produit fini.

Il est avantageux d'additionner à la composition d'ensimage un ou plusieurs époxydes, en solution sous forme d'époxydes modifiés ou en émulsion. Cette addition facilite la fabrication de la fibre ensimée. On a remarqué que l'adjonction d'époxydes dans la composition d'ensimage facilite le bobinage pour l'obtention de stratifils en évitant en particulier la "bourre".

Comme il sera décrit par la suite, l aspect des produits finis est fonction de la concentration des différents constituants de la composition. Généralement, le produit fini obtenu par la mise

en oeuvre de l'invention présente un bon aspect lorsque la fibre de renforcement est ensimée à partir d'une solution aqueuse contenant, pour 100 % en poids d'ensimage, les proportions suivantes en différents constituants principaux :

- 0 à 6 % en poids d'une solution aqueuse d'une ou plusieurs résines époxydes modifiées ou d'une émulsion d'une ou plusieurs résines époxydes,
- 4 à 20 % en poids d'une émulsion d'un copolymère à base d'acétate de vinyle et de monomères acryliques dont un au moins est à fonction époxyde,
- 0,01 à 1 % en poids d'agents de pontage tel qu'un organo-silane,
- 0,1 à 1 % en poids d'un sel hygroscopique,
- 0 à 2 % en poids d'un lubrifiant,
- 0 à 1 % d'acide acétique cristallisable,

plus de l'eau pour compléter à 100 %.

L'agent de pontage est généralement un organo-silane ou un mélange d'organosilanes choisis parmi des amino-silanes comme l'aminopropyltriéthoxysilane, l'aminopropyltriméthoxysilane, le β-aminoéthyl-γ-aminopropyl-triéthoxysilane, le β-aminoéthyl-γ-aminopropyltriméthoxysilane, des vinyles silanes comme le méthacryloxypropyltriméthoxysilane, le vinyle tri β-méthoxyéthoxysilane.

Dans une réalisation particulièrement adaptée à la réalisation industrielle de l'invention, la fibre de verre est ensimée à l'aide de la composition d'ensimage suivante :

- 2 à 3 % en poids d'une solution ou d'une émulsion de résine époxyde,
- 10 % en poids d'un copolymère à base d'acétate de vinyle et de monomères acryliques dont un au moins est à fonction époxyde,
- 0,2 % en poids de gamma-méthacryloxypropyltriméthoxysilane,
- 0,3 % de chlorure de lithium,
- 0,2 % d'huile de ricin hydrogénée polyoxyéthylénée,
- 0,3 % d'acide acétique,

complément à 100 % par de l'eau désionisée.

L'extrait sec de cette composition est de 7 à 8 %, ce qui correspond à environ 1,3 à 2 % d'ensimage sur la fibre de verre séchée.

Le fil de verre obtenu suivant le procédé de l'invention porte de 0,3 à 3 % d'ensimage par rapport au poids total de la fibre ensimée et présente une bonne intégrité qui, mesurée d'après une méthode décrite par la suite, est de l'ordre de 1,2 à 1,3. Il se

prête bien à l'opération de bobinage, particulièrement lorsque l'enrobage contient une résine époxyde. Les fibres ensimées sont bien protégées. Elles sont insensibles à l'électricité statique.

D'autres caractéristiques et avantages de l'invention ressortiront de la description suivante et des exemples particuliers de mise en oeuvre.

EXEMPLE 1

On prépare une composition d'ensimage contenant les produits suivants, exprimée en pourcentage par rapport à la composition totale :

- 2 % d'une solution aqueuse d'une résine époxyde modifiée de structure :

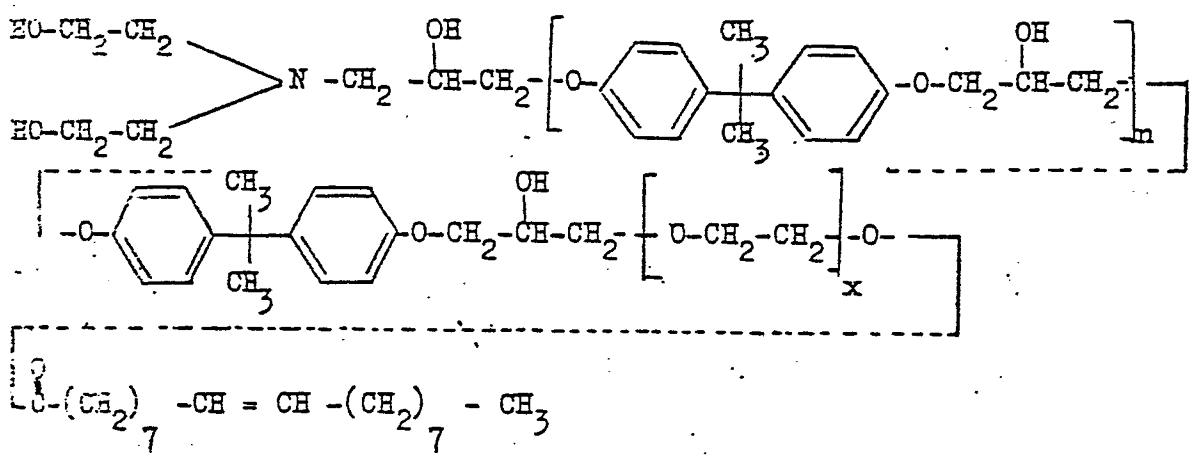

avec x = 8 à 10
et n moyen d'environ 3,5

que nous désignons par époxy A modifiée.

- 1 % d'une solution aqueuse d'une résine époxyde modifiée de structure :

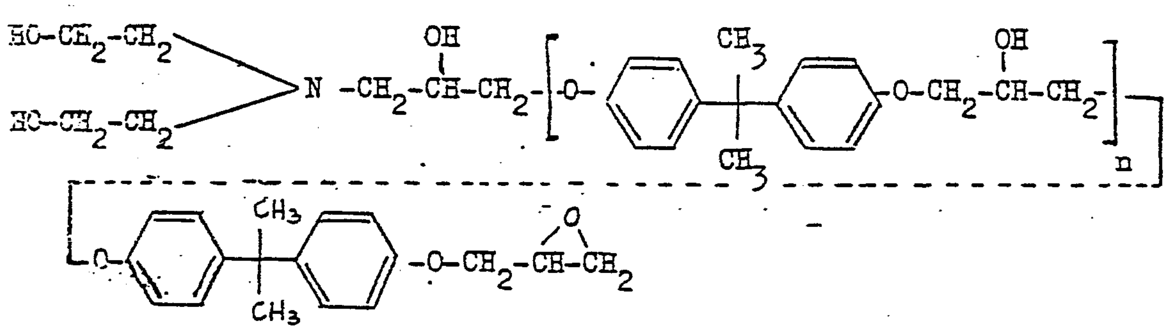

avec n moyen d'environ 3,5

que nous désignons par époxy B modifiée.

- 10 % d'une émulsion d'un copolymère à base d'acétate de vinyle, de monomères acryliques dont un au moins est à fonction époxyde,

- 0,2 % d'un agent de pontage, le gamma-méthacryloxypropyltriméthoxysilane,

- 0,3 % de chlorure de lithium,
- 0,2 % d'huile de ricin hydrogénée polyoxyéthylénée

complétéeà 100 % par de l'eau désionisée.

Le pH de la composition est d'environ 4 à 5 et l'extrait sec de 7,8 % en poids.

On prépare la solution de résine époxyde modifiée B en plaçant 1000 parties d'un composé C de formule :

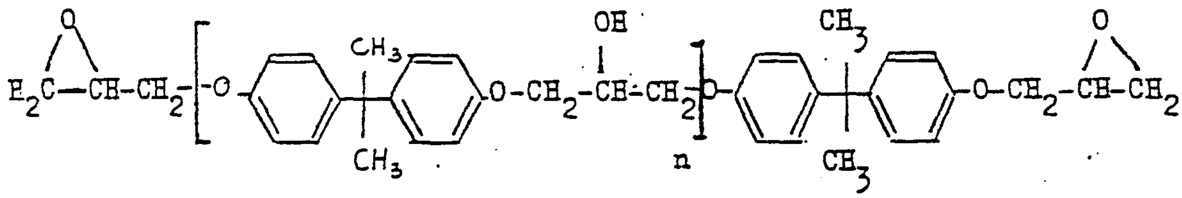

avec n moyen d'environ 3,5

dans un réacteur avec 1000 parties d'éthylglycol ou éther monoéthylique de l'éthylèneglycol. Une fois la résine dissoute, on ajoute lentement sous reflux, 85 parties de diéthanolamine. Lorsque l'addition est terminée, on laisse réagir sous reflux, pendant une heure environ. On obtient une solution d'époxyde B modifiée de structure :

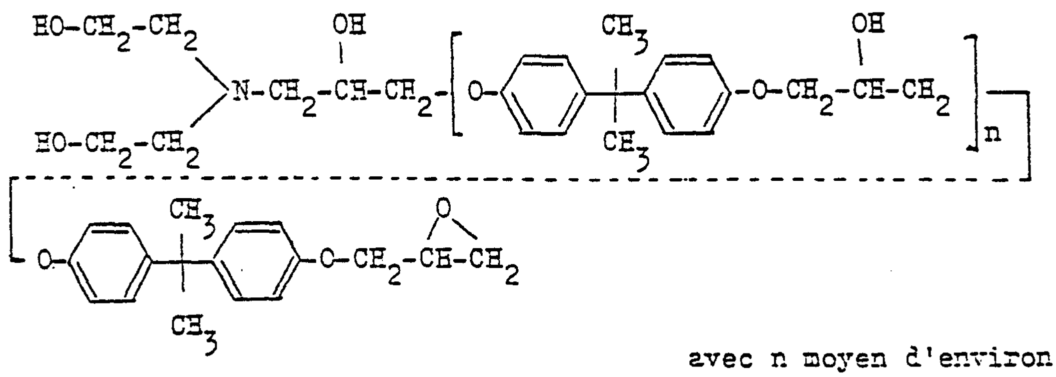

avec n moyen d'environ 3,5

On prépare la solution de résine époxyde modifiée A en plaçant 2051 parties d'un même composé C déjà formulé dans un réacteur avec 878, 7 parties d'acétate d'éthylglycol. On chauffe sous reflux à 105°C pour dissoudre la résine. Ensuite, on élève la température à 120° C et on ajoute lentement sous agitation et reflux, 165,7 parties de diéthanol-amine. Lorsque l'addition est terminée, on laisse réagir sous reflux pendant une heure environ.

On ajoute ensuite 6,6 parties de carbonate de potassium et 1019,3 parties de monooléate de polyéthylèneglycol de poids moléculaire 300. On laisse réagir 4 heures. On ajoute enfin 878,7 parties d'éthylglycol.

On obtient une solution de :

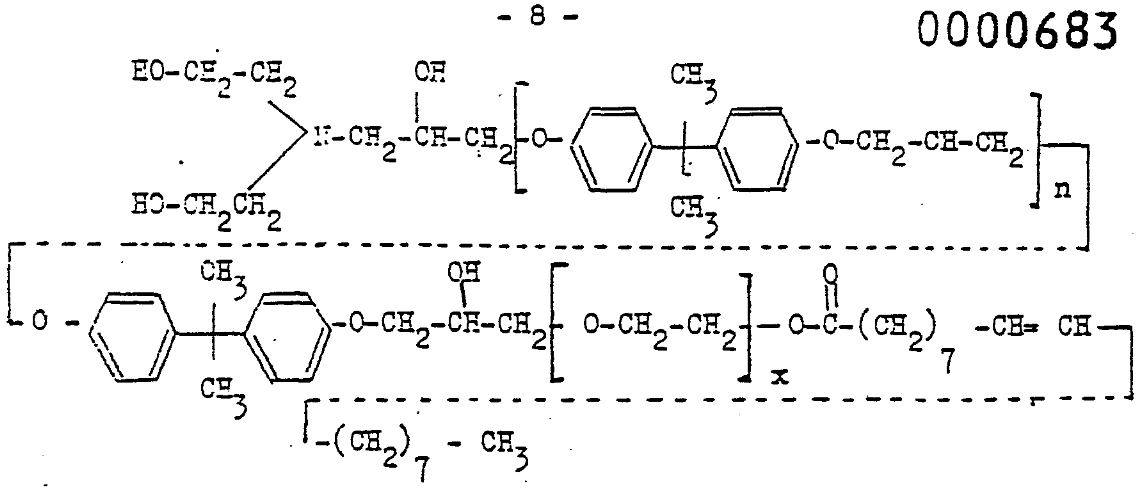

avec n moyen d'environ 3,5
et x : 8 à 10

L'émulsion de copolymère à base d'acétate de vinyle et de monomères acryliques dont un au moins est à fonction époxyde est fabriquée par la société PRODUITS CHIMIQUES ROUSSELOT et elle est commercialisée sous l'appellation DZ 23. Les monomères acryliques sont notamment de l'acide acrylique et de l'acrylate d'éthyle. Le monomère acrylique à fonction époxyde est du méthacrylate de glycidyle. La teneur en oxygène oxiranique est égale à environ 0,2 % par rapport à l'émulsion totale, ce qui correspond à un pourcentage en monomère méthacrylate de glycidyle d'environ 3 % par rapport à l'ensemble des monomères constituant le copolymère. L'émulsion de DZ 23 est stabilisée par l'alcool polyvinylique. L'extrait sec est de 50 à 60 % et le poids moléculaire du copolymère est de l'ordre de 300 000.

Le silane utilisé comme agent de pontage est une solution aqueuse ou hydrolisat de gamma-méthacryloxypropyltriméthoxysilane hydrolysé à pH 4, la concentration est généralement inférieure à 1 %.

L'huile de ricin hydrogénée polyoxyéthylénée a la structure suivante :

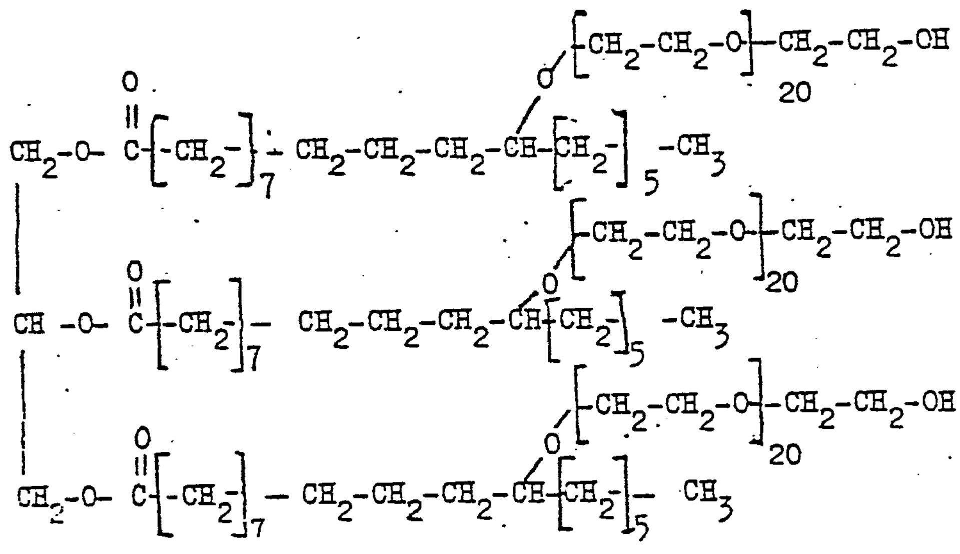

Pour fabriquer la composition d'ensimage, on effectue préalablement la mise en dispersion des époxydes A et B. Pour cela on rassemble les deux solutions mères d'époxydes modifiés, on ajoute de l'acide acétique, à raison d'environ 40 grammes par kilogramme de solution mère. On agite avec un agitateur du type EKATO muni d'une hélice marine. En poursuivant l'agitation, on ajoute lentement de l'eau désionisée. Lorsqu'on a ajouté autant d'eau que de solution mère, on se trouve au point d'inversion à partir duquel on ajoute encore une quantité environ égale en eau pour diminuer la viscosité.

On peut procéder alors à la préparation de la composition d'ensimage. On place dans un récipient et dans les quantités préalablement citées l'hydrolysat de silane auquel on ajoute l'émulsion du copolymère Dz 23 préalablement dilué avec son poids en eau, puis la dispersion d'époxydes, on ajoute ensuite l'huile de ricin auparavant dissoute dans environ trois fois son poids en eau désionisée à 60°C et refroidie à 20°C par addition d'eau froide, on ajoute enfin une solution aqueuse à environ 6 % en poids de chlorure de lithium.

On procède au fibrage du verre. Les filaments de verre E obtenus par la fusion de billes ou par la fusion directe ont un diamètre de 10 ou 14 microns et sont assemblés en fils de 40 ou 80 tex (1 tex : 1 gramme par 1000 mètres de fil) après qu'on leur ait appliqué l'ensimage précédemment préparé. Le fil est enroulé de façon continue pour former des gâteaux. Les gâteaux sont séchés à l'air chaud à 130°C pendant 12 heures. Les fils de plusieurs gâteaux sont bobinés ensuite en mèches de titre global pouvant varier et mis en pelote. Le fil de verre ainsi ensimé porte 1,6 % d'ensimage par rapport au poids total de la fibre ensimée. Les fils ensimés sont intègres, leur intégrité mesurée par la méthode maintenant décrite est de 1,2.

Pour mesurer l'intégrité des fils ensimés, on procède de la manière suivante. On coupe des bouts de fils d'environ 50 millimètres de long qu'on étale au hasard sur une surface plane généralement en verre. Sur le verre on place une grille carrée comprenant 16 carreaux d'environ 2 centimètres de côté. Le nombre de bouts de fil par carreau est de l'ordre de quelques unités, généralement 4 à 5. On note les fils qui se situent dans chaque carreau. On attribue un point à un fil intègre constitué d'un seul bâton. On attribue deux points à un fil filamenté en partie et on attribue trois points à un fil entièrement divisé en filaments, donc d'intégrité très mauvaise. La mesure de l'intégrité peut donc varier de 1 à 3. On additionne les

points dans chaque carreau. Le total des points correspondant à un carreau est divisé par le nombre de fils qu'il comprend. On procède de la même façon pour chacun des 16 carreaux. On obtient finalement l'intégrité moyenne statistique qui dans le cas de l'exemple a pour valeur 1,2.

Les fils ensimés suivant l'exemple ont une bonne raideur, d'environ 165 mesurée d'après la méthode suivante.

On prend 50 centimètres d'une mèche qu'on accroche en son milieu à une pointe. La mèche forme un arc et on mesure la corde qui le soustend à une distance de 75 millimètres du point d'accrochage. Dans cet exemple, la corde a une longueur de 165 millimètres.

Le fil est bien protégé. L'ensimage est partiellement soluble, à 60 % dans le styrène. La fibre enrobée est prête à être utilisée dans le renforcement des préimprégnés SMC, comme il sera décrit par la suite.

EXEMPLE 2

On fabrique un fil de verre de façon analogue à l'exemple 1 à la différence que la composition d'ensimage préparée avant le fibrage ne contient pas de résine époxyde A modifiée et que l'extrait sec est de 6,6 %.

Le fil de verre ensimé porte 1,6 % en poids d'ensimage. L'intégrité est de 1,2, la raideur est de 170. L'ensimage est soluble à environ 60 % dans le styrène. Durant la préparation de la fibre on observe une légère tendance à la"bourre" lors du bobinage en pelote.

EXEMPLE 3

On fabrique un fil de verre de façon analogue à l'exemple 1, à la différence que la composition d'ensimage préparée avant le fibrage ne contient pas de résine époxyde B modifiée. L'extrait sec de l'ensimage est de 7,2 % en poids.

Le fil de verre obtenu porte 1,4 % en poids d'ensimage. L'intégrité est de 1,3 et la raideur de 135. L'ensimage est soluble à environ 60 % dans le styrène.

EXEMPLE 4

On fabrique un fil de verre de façon analogue à l'exemple 1, à la différence que la composition d'ensimage préparée avant le fibrage ne contient aucune résine époxyde A modifiée ou B modifiée. L'extrait sec de l'ensimage est de 5,8. Le fil de verre obtenu porte 1,3 % en poids d'ensimage. L'ensimage est soluble à environ 50 % dans le styrène. On observe une tendance importante à la bourre lors du

bobinage en pelote ce qui rend cette opération très délicate.

EXEMPLE 5

On fabrique un fil de verre de façon analogue à l'exemple 1, à la différence que l'on remplace l'huile de ricin hydrogénée polyoxyéthylénée par un autre lubrifiant, dans la même proportion, ce lubrifiant étant un mélange d'huile minérale, de silicone et de polyéthylèneglycol. L'extrait sec de l'ensimage est de 7,8 %. Le fil de verre obtenu porte 1,7 % en poids d'ensimage. Son intégrité est de 1,3 alors que la raideur est de 160. L'ensimage est soluble à environ 60 % dans le styrène. On observe durant la fabrication une tendance à la bourre lors du bobinage.

EXEMPLE 6

On fabrique un fil de verre de façon analogue à l'exemple 1, à la différence que l'on remplace les solutions de résine époxydes modifiées A et B par une émulsion d'une autre résine époxyde. Les résines époxydes qui conviennent ont pour formule générale la formule C déjà décrite mais avec n compris entre 0 et 2. On prépare l'émulsion de résine époxyde à partir des composants suivants :

| | | |
|---|---|---|
| - résine époxy au bisphénol A/épichlorydrine | D | 100 parts |
| - xylène | | 2 parts |
| - éthylglycol | | 4 parts |
| - "Antarox" Co 970 | | 10 parts |
| - polyvinylpyrrolidone K90 à 20 % | | 5 parts |

et de l'eau désionisée pour avoir une émulsion à 50 % d'extrait sec.

La résine bisphénol A/épichlorydrine D est de l'ARALDITE CY 207 commercialisée sous cette appellation par la Société CIBA PROCHAL. C'est une résine époxyde de formule C, de masse moléculaire 435, d'indice d'époxyde 4,6 et avec n moyen d'environ 0,3.

L'ANTAROX Co 970 joue le rôle d'agent émulsifiant. C'est un condensat d'oxyde d'éthylène sur un nonylphénol et il est commercialisé sous cette appellation par la Société GAF.

La polyvinylpyrrolidone K 90 est également commercialisée par GAF.

L'émulsion de résine époxyde décrite ci-dessus entre dans la composition d'ensimage dans les mêmes proportions que la solution de résines époxydes modifiées à savoir de l'ordre de 2 %.

L'extrait sec de l'ensimage est de 7,8 % en poids.

Le fil fabriqué et enduit à l'aide de l'ensimage suivant l'exemple, porte 1,4 % en poids d'ensimage. Son intégrité est de 1,1 et sa raideur de 160. L'ensimage est soluble à environ 70 % dans le styrène.

EXEMPLE 7

On fabrique un fil de verre de façon analogue à l'exemple 1, à la différence que l'on remplace les solutions de résine époxydes modifiées par une émulsion d'une autre résine époxyde. L'émulsion est préparée à partir des composants suivants et dans les proportions indiquées :

- résine au bisphénol A/épichlorydrine E 100 parts
- xylène 5 parts
- éthylglycol 5 parts
- "Antarox"Co 970 10 parts
- polyvinylpyrrolidone K90 à 20 % 5 parts

eau désionisée en quantité nécessaire pour une émulsion à 50 % d'extrait sec.

La résine au bisphénol A/épichlorydrine E est de l'Araldite BR 16 commercialisée sous cette appellation par la Société CIBA PROCHAL. C'est une résine époxyde, désignée préalablement par C, de masse moléculaire 870, d'indice d'époxyde 2,3 et n moyen d'environ 2. L'émulsion entre dans la composition d'ensimage à raison de 2 % environ en poids. L'extrait sec de l'ensimage est de 7,7 %. Le fil fabriqué et enduit à l'aide de l'ensimage suivant l'exemple porte 1,45 % en poids d'ensimage. Son intégrité est de 1,1 et sa raideur de 150.

L'ensimage est soluble à environ 70 % dans le styrène.

EXEMPLE 8

Le fil de verre est préparé de façon analogue à l'exemple 1, à la différence que l'on n'utilise pas d'huile de ricin hydrogénée polyoxyéthylénée ni d'autres lubrifiants de remplacement. On obtient un fil qui a des caractéristiques proches de celui de l'exemple 1.

Par la suite on décrit des exemples de fabrication de fil ensimé à l'aide de compositions d'ensimage différentes de celles de l'invention.

EXEMPLE 9

On fabrique un fil de verre de façon analogue à l'exemple 1, mais la composition d'ensimage utilisée ne contient pas le copolymère d'acétate de vinyle et de monomères acryliques dont un au moins est à fonction époxyde.

Ce copolymère est remplacé dans la composition par un copolymère d'acétate de vinyle et de N-méthylol-acrylamide commercialisé sous l'appellation 1252828 de la NATIONAL STARCH COMPANY.

L'extrait sec de l'ensimage est de 7,5 %. Le fil ensimé porte [illegible] poids d'ensimage. Son intégrité est de 1,2 et sa raideur de

0000683

155. L'ensimage est soluble à environ 50 % dans le styrène.

EXEMPLE 10

On fabrique le fil de verre de façon analogue à l'exemple 1, mais à l'aide d'une composition d'ensimage décrite dans le brevet français 2 186 440 et qui comprend de l'huile de ricin et d'autres composants comme il est indiqué ci-après :

| | |
|---|---|
| - Latex de copolymère de monomère (*) acrylique et d'acétate de vinyle (48 % de solides ; pH 4,0 taille des particules : 0,2 µm charge de particule : anionique viscosité : 200 cps et poids spécifique à 22°C : 1,067 kg/l) | 6 % |
| - (*) le terme de monomère acrylique signifie ici : acide acrylique ou un de ses dérivés, mais non époxydé | |
| - Agent tensio-actif nonionique : huile de ricin hydrogénée polyoxyéthylénée | 0,05 % |
| - Gamma-méthacryloxypropyltriméthoxysilane | 0,2 % |
| - Chlorure méthacrylatochromique (volan) | 0,06 % |
| - Chlorure de lithium | 0,15 % |
| - Eau désionisée | complément |

L'extrait sec est de 3,3 %. Le fil ensimé porte 0,65 % en poids d'ensimage ; le fil a une intégrité assez mauvaise, de 1,35 ; sa raideur est de 150. On observe durant l'opération de bobinage une grande tendance à la bourre, ce qui rend l'opération délicate. L'ensimage est soluble à environ 45 % dans le styrène.

EXEMPLE 11

On fabrique un fil de verre de façon analogue à l'exemple 10, en utilisant la même composition d'ensimage mais avec une proportion différente pour les composants.

| | |
|---|---|
| - Latex de copolymère de monomère (*) acrylique et d'acétate de vinyle (48 % de solides ; pH 4,0 taille des particules : 0,2 µm charge de particule : anionique viscosité : 200 cps et poids spécifique à 22°C : 1,067 kg/l) | 15 % |

(*) le terme de monomère acrylique signifie ici : acide acrylique ou un de ses dérivés, mais non époxydé

- Agent tensio-actif non ionique : huile de ricin hydrogénée polyoxyéthylénée 0,12 %
- Gamma-méthacryloxypropyl-triméthoxysilane 0,5 %
- Chlorure méthacrylatochromique (volan) 0,15 %
- Chlorure de lithium 0,3 %
- Eau désionisée complément

L'extrait sec est de 8,2 %. Le fil ensimé porte 1,6 % en poids d'ensimage. Le fil a une intégrité de 1,2 et une raideur de 151. L'ensimage est soluble à 35 % dans le styrène.

EXEMPLE 12

On fibre le verre comme précédemment mais en utilisant une composition d'ensimage pour SMC classique et qui est décrit dans l'exemple 1 du brevet français 2 110 469. Le fil ensimé porte 1,3 % d'ensimage. Le fil a une intégrité de 1,2 et une raideur de 150.

On utilise les fils de verre ensimés selon les exemples précédents pour le renforcement de préimprégnés SMC. Plusieurs types de préimprégnés renforcés ont été réalisés et en particulier un préimprégné blanc, un préimprégné gris, un préimprégné bleu et un préimprégné de type "bas retrait".

A partir de ces préimprégnés on a fabriqué des articles moulés sous forme de disques dont l'aspect a été noté pour mettre en évidence les avantages apportés par l'invention.

PREIMPREGNE DE TYPE BLANC :

On place dans un récipient cylindrique muni d'un agitateur 100 parties d'une résine constituant la matière de base du préimprégné et qui est un polyester insaturé du type orthophtalique, commercialisé sous l'appellation LEGUVAL W 20 par la Société BAYER. Cette résine est vendue sous forme d'un liquide contenant 30 % de monomères styrène. On ajoute sous agitation et à température ambiante une partie d'un catalyseur haute température, par exemple du perbenzoate de tertiobutyle qui est commercialisé sous l'appellation TRIGONOX C par la société CHALONNAISE DES PEROXYDES et qui est sous forme liquide. On ajoute ensuite une partie d'oxyde de titane commercialisé sous l'appellation KRONOS RN 61 par la Société Internationale du Titane. On rajoute ensuite, dans un ordre quelconque, des charges qui sont du carbonate de calcium sous forme de poudre blanche dont les particules sont de diamètre déterminé, par exemple on ajoute 40 parties de Millicarb dont les particules ont un diamètre moyen de 2,5 microns et 60 parties d'Omya BL dont les particules ont un diamètre moyen de 5 microns, commercialisées par la

Société OMYA. On ajoute un démoulant interne sous forme de trois parties de stéarate de zinc et 3 parties d'une poudre de polyéthylène haute densité commercialisée sous l'appellation Coathylène type HA 1681 par la Société suisse PLASLABOR. Lorsque le mélange est homogénéisé, on ajoute un agent de mûrissement qui peut être de la magnésie MgO de la Société MERCK. Le mélange est alors porté à une température de 35°C environ. On obtient une pâte qui est déposée sur une feuille de polyéthylène à l'aide d'une racle sur une machine SMC. On dépose sur cette première couche de résine un tapis de fibres préparées selon un des exemples décrits précédemment. La mèche de verre est découpée sous forme de fibres, de longueur généralement 25 ou 50 mm, à l'aide d'un coupeur FINN FRAM placé au-dessus de la machine SMC. On dépose ensuite une deuxième couche de résine que l'on recouvre d'une deuxième feuille de polyéthylène. La fibre de verre représente environ 30 % en poids total du composite.

Le composite passe entre des rouleaux qui ont pour rôle de refouler la résine à travers les fibres de verre et il est enroulé pour former un rouleau pouvant être manipulé grâce aux feuilles extérieures de polyéthylène. On laisse mûrir le rouleau à température ambiante pendant une durée de plusieurs jours ou même de plusieurs mois le cas échéant.

Au bout de cette période le préimprégné est prêt à l'emploi. On découpe dans la feuille de préimprégné un flan d'une surface d'environ 60 % de la surface de l'objet moulé fini, on retire les deux feuilles de protection de polyéthylène et on place le flan dans un moule. L'article est moulé sous presse à une température de l'ordre de 150°C et sous une pression de l'ordre de 50 bars. L'opération de pressage dure environ une minute par millimètre d'épaisseur. Dans notre cas, nous avons moulé des disques de diamètre 170 mm et d'épaisseur 4 mm.

On a fabriqué plusieurs disques pour chacun des fils préparés suivant les exemples 1 à 12. Les disques obtenus ont été notés suivant leur aspect en tenant compte de la visibilité des fibres de verre par différence de couleur ou par saillie. On a noté 5 lorsque la fibre de verre ne se distingue pas de la matière, ce qui correspond à un résultat excellent. A contrario, on a noté 1 lorsque le résultat est très mauvais, à savoir une visibilité nette des fibres dans la résine. On a noté 3+ lorsque l'aspect est intermédiaire entre 3 et 4. Dans le cas d'un imprégné blanc, préparé comme ci-dessus, les résultats obtenus pour des fibres ensimées suivant les exemples 1, 8, 10, 11, 12 apparaissent dans le tableau suivant :

| Fil préparé dans l'exemple n° | Selon l'invention | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Cotation Aspect | 4 | | | | | | | 3+ | | 2 | 1+ | 2+ |

Les fibres selon les exemples 10 et 11 ont une coloration bleue due vraisemblablement au volan qui entre dans la composition d'ensimage, ce qui les rend très visibles dans la résine.

PREIMPREGNE DE TYPE GRIS

Le préimprégné gris est préparé suivant la méthode décrite précédemment avec une résine ayant les composants suivants :

| Composants | Nombre de parties |
|---|---|
| LEGUVAL W 20 | 100 |
| MILLICARB | 60 |
| COATHYLENE | 3 |
| STEARATE DE ZINC | 3 |
| GRIS STRATYREX 24/2 | 6 |
| TRIGONOX C | 1 |
| MgO | 1,5 |

Le gris STRATYREX est un pigment gris commercialisé sous cette appellation par RHONE POULENC PETROCHIMIE.

On prépare un préimprégné gris pour chaque fibre de verre fabriqué suivant les exemples 1 à 12.

Les disques obtenus sont notés suivant leur aspect. La cotation apparaît dans le tableau suivant :

| Fil préparé dans l'exemple n° | Selon l'invention | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Cotation Aspect | 4 | 4 | 4 | 4 | 3+ | 4 | 4 | 4 | 3+ | 4 | 3 | 2+ |

PREIMPREGNE DE TYPE BLEU

Le préimprégné SMC bleu est préparé suivant la méthode décrite précédemment avec une résine ayant les composants suivants :

| Composants | Nombre de parties |
|---|---|
| LEGUVAL W 20 | 100 |
| MILLICARB | 40 |
| OMYA BL | 60 |
| COATHYLENE | 3 |
| STEARATE DE ZINC | 3 |
| BLEU FERRO | 8 |
| TRIGONOX C | 1 |
| MgO | 1,5 |

Le bleu Ferro est un pigment bleu commercialisé par la Société FERRO sous la référence VD 201.

On prépare un préimprégné bleu pour chacun des fils de verre fabriqué suivant les exemples 1 à 12. La cotation des disques bleus obtenus apparaît dans le tableau suivant :

| Fil préparé dans l'exemple n° | Selon l'invention | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Cotation Aspect | 3+ | 2+ | 3+ | 3+ | 3+ | 3+ | 2+ | 3 | 2+ | 3+ | 2 | 2 |

La fibre est généralement plus visible dans la matière pigmentée en bleu que dans la matière pigmentée en gris.

PREIMPREGNE DE TYPE BAS RETRAIT

On prépare un préimprégné type bas retrait suivant la méthode décrite précédemment avec une résine ayant les composants suivants :

| Composants | Nombre de parties |
|---|---|
| PARAPLEX P 340 | 60 |
| PARAPLEX P 701 | 40 |
| MILLICARB | 150 |
| STEARATE DE ZINC | 3 |
| TRIGONOX C | 1 |
| $Mg(OH)_2$ | 2,5 |

Le PARAPLEX P 340 est un polyester insaturé commercialisé sous cette appellation par la Société ROHM et HAAS. Le PARAPLEX P 701 également de ROHM et HAAS est un polymère acrylique en solution dans le styrène qui

agit comme un compensateur de retrait. La résine est renforcée par de la fibre de verre préparée suivant des exemples précédents et dans une proportion de 30 % en poids.

Les disques obtenus avec des fibres préparées selon les exemples 1, 10 et 12 sont cotés suivant leur aspect.

| Fil préparé dans l'exemple n° | Selon l'invention | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Cotation Aspect | 4 | | | | | | | | | 3 | | 2 |

Les disques obtenus à partir des préimprégnés renforcés par des fibres préparées selon l'invention, à savoir d'après les exemples 1 à 8 ont un aspect généralement bon, meilleur que les disques renforcés par des fibres non conformes à l'invention des exemples 9 à 12, quel que soit le type de préimprégné. Les préimprégnés utilisant la fibre ensimée selon la réalisation préférée de l'invention fournissent des articles moulés où la fibre est difficilement décelable. Les articles fabriqués selon l'invention peuvent être commercialisés bruts de moulage sans subir de granulation ou d'enduction par une couche de peinture pour en améliorer l'aspect.

Les fibres enrobées selon l'invention peuvent également avoir d'autres applications telles que confection de mats ou préformés pour moulage à froid ou encore la projection simultanée.

0000683

REVENDICATIONS

1. Procédé de fabrication de fibres de verre revêtues d'un enrobage les rendant aptes au renforcement de préimprégnés SMC, comportant la suite d'opérations suivantes :

- on étire mécaniquement à grande vitesse des filaments de verre fondu,
- on revêt les filaments à l'aide d'une composition aqueuse d'ensimage,
- on rassemble les filaments de verre en cours d'étirage sous forme de fils qui sont : enroulés en gâteaux, séchés, puis assemblés en mèche de stratifils sous forme de pelote,

ou rassemblés directement en mèche sous forme de pelote et séchés, caractérisé en ce que les filaments sont revêtus à l'aide d'une composition aqueuse d'ensimage comprenant :

. 0 à 6 % en poids d'une solution aqueuse d'une ou plusieurs résines époxydes modifiées ou d'une émulsion d'une ou plusieurs résines époxydes,
. 4 à 20 % en poids d'une émulsion d'un copolymère à base d'acétate de vinyle et de monomères acryliques dont un au moins est à fonction époxyde,
. 0,02 à 1 % en poids d'agent de pontage tel qu'un organo-silane,
. 0,2 à 1 % en poids d'un sel hygroscopique,
. 0 à 2 % en poids d'un lubrifiant,
. 0 à 1 % en poids d'acide acétique cristallisable,
. complément à 100 % en eau désionisée.

2. Procédé de fabrication de fibres de verre selon la revendication 1, caractérisé en ce que le lubrifiant de la composition d'ensimage est choisi parmi les composés suivants : les émulsions, de polyéthylène simple ou modifié cationique, les composés aminés cationiques, les tensio-actifs non ioniques.

3. Procédé de fabrication de fibres de verre selon la revendication 2, caractérisé en ce que les tensio-actifs non ioniques sont choisis parmi le monolaurate de polyéthylène-glycol de poids moléculaire 300, l'huile de ricin hydrogénée-polyoxyéthylènée.

4. Procédé de fabrication de fibres de verre selon une des revendications 1 à 3, caractérisé en ce que le lubrifiant est de l'huile de ricin hydrogénée polyoxyéthylénée.

0000683

5. Procédé de fabrication de fibres de verre selon une des revendications 1 à 4, caractérisé en ce que le copolymère à base d'acétate de vinyle et de monomères acryliques, dont un au moins est à fonction époxyde , est composé essentiellement des monomères acétate de vinyle, acide acrylique, acrylate d'éthyle, méthacrylate de glycidyle et qu'il a un poids moléculaire d'environ 300 000.

6. Procédé de fabrication de fibres de verre selon une des revendications 1 à 5, caractérisé en ce que l'agent de pontage est un organo-silane ou un mélange d'organo-silanes choisis parmi les amino-silanes comme l'aminopropyltriéthoxysilane, l'aminopropyltriméthoxysilane, le β aminoéthyl-γ- aminopropyltriéthoxysilane, le β amino-éthyl-γ-aminopropyltriméthoxysilane ou des vinyl - silanes comme le méthacryloxypropyltriéméthoxysilane, le vinyl - tri- β-méthoxyéthoxysilane.

7. Procédé de fabrication de fibres de verre selon une des revendications 1 à 6, caractérisé en ce que le sel hygroscopique est du chlorure de lithium.

8. Procédé de fabrication de fibres de verre selon une des revendications 1 à 7, caractérisé en ce que la composition aqueuse d'ensimage comprend :

- 2/3 % en poids d'une solution ou d'une dispersion de résines époxydes,
- 10 % en poids d'un copolymère à base d'acétate de vinyle et de monomères acryliques dont un au moins est à fonction époxy,
- 0,2 % en poids de gamma-méthacryloxypropyltriméthoxysilane,
- 0,3 % en poids de chlorure de lithium,
- 0,2 % en poids d'huile de ricin hydrogénée-polyoxyéthylénée,
- 0,3 % en poids d'acide acétique cristallisable,
- complément à 100 % en eau désionisée.

9. Procédé de fabrication de fibres de verre selon une des revendications 1 à 8, caractérisé en ce que la solution de résine époxyde est essentiellement une solution d'une résine époxyde modifiée de structure :

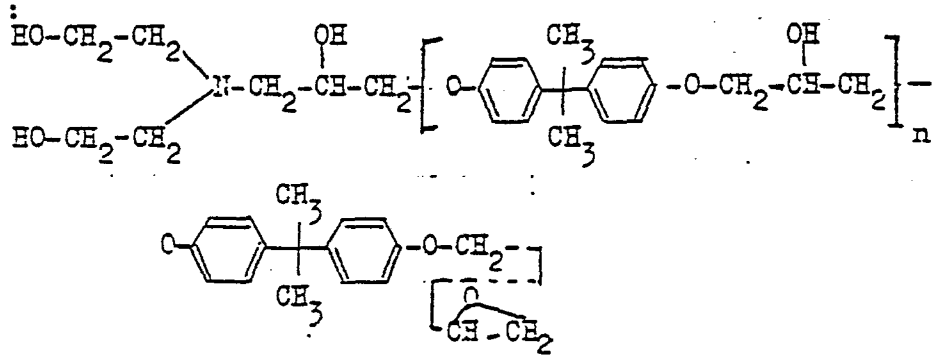

B avec n moyen d'environ 3,5

0000683

10. Procédé de fabrication de fibres de verre selon une des revendications 1 à 8, caractérisé en ce que la solution de résines époxydes est essentiellement une solution d'une résine époxyde modifiée de structure.

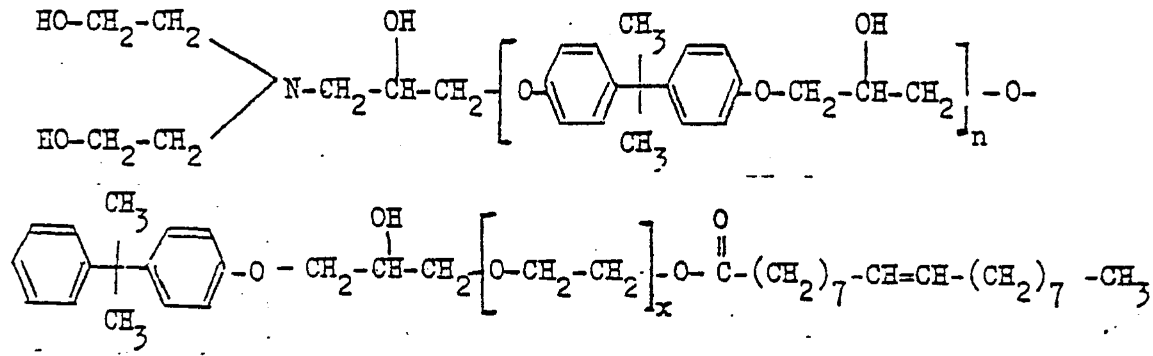

A avec x = 8 à I0 et n moyen d'environ 3,5

11. Procédé de fabrication de fibres de verre selon une des revendications 1 à 8, caractérisé en ce que la solution de résines époxydes est un mélange d'une solution d'une résine époxy modifiée B et d'une solution d'une résine époxy modifiée A, la solution de résine B représentant 0,2 à 2 % en poids de la composition d'ensimage, alors que la solution de résine A représente 0,3 à 4 % en poids de la composition d'ensimage.

12. Procédé de fabrication de fibres de verre selon une des revendications 1 à 8, caractérisé en ce que l'émulsion de résine époxyde est essentiellement une émulsion d'une ou d'un mélange de résines époxydes de structure :

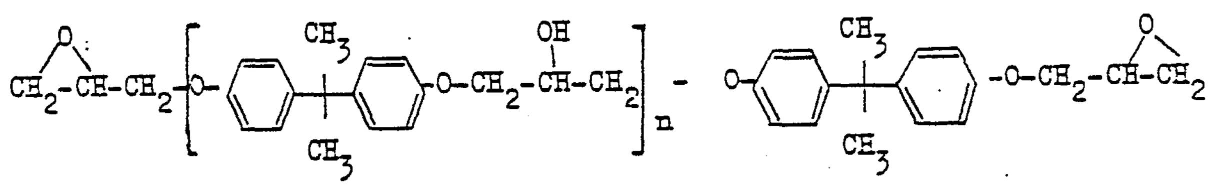

avec n moyen compris entre 0 et 2.

13. Procédé de fabrication de fibres de verre selon la revendication 12, caractérisé en ce que n est d'environ 0,4 et que la résine époxyde a un indice d'époxyde de 4,6.

I4. Procédé de fabrication de fibres de verre selon la revendication I2, caractérisé en ce que n est d'environ 2 et que la résine époxyde a un indice d'époxyde de 2,3.

I5. Fibre de verre préparée suivant le procédé selon une des revendications 1 à 14.

16. Fibre de verre selon la revendication 15, caractérisée en ce que le poids d'ensimage sur une fibre représente 0,3 à 3 % du poids total de la fibre ensimée et séchée.

17. Composition de matière plastique renforcée, caractérisée en ce qu'elle comporte des fibres de verre préparées selon une des revendications 1 à 14.

18. Préimprégnés SMC comprenant une résine telle qu'un polyester insaturé, des charges telles que le carbonate de calcium, un démoulant tel que le stéarate de zinc ou un polyéthylène, un catalyseur haute température, de la magnésie, des fibres de verre ensimées, caractérisés en ce que les fibres de verre sont fabriquées d'après le procédé selon une des revendications 1 à 14.

19. Article moulé en matière plastique obtenu à partir d'une composition de matière plastique selon une des revendications 17 et 18.

0000683

Office européen des brevets

# RAPPORT DE RECHERCHE EUROPEENNE

Numéro de la demande
EP 78 40 0068

| Catégorie | DOCUMENTS CONSIDERES COMME PERTINENTS<br>Citation du document avec indication, en cas de besoin, des parties pertinentes | Revendication concernée | CLASSEMENT DE LA DEMANDE (Int. Cl.²) |
|---|---|---|---|
| | DE - A - 2 659 370 (OWENS-CORNING FIBERGLAS)<br>* Revendications 1,3 et 11; page 3, lignes 25-29; page 5, lignes 15-22; page 6, lignes 19-22; page 7, lignes 22-25 *<br>-- | 1,6 et 15 | C 03 C 25/02<br>C 08 J 5/24<br>C 08 J 5/08 |
| | FR - A - 2 186 440 (JOHNS-MANVILLE)<br>* Revendications 1 et 5 *<br>-- | 1,2,6,7 | |
| | | | DOMAINES TECHNIQUES RECHERCHES (Int. Cl.²) |
| D,A | FR - A - 2 110 469 (OWENS-CORNING FIBERGLAS)<br>* Revendications 1,9,13,16; page 12, en haut *<br>---- | 1,6,8,15,17,18,19 10 | C 03 C 25/02<br>C 08 J 5/24 |

CATEGORIE DES DOCUMENTS CITES
X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 12-10-1978 | GAJ |